# EUROPÄISCHE PATENTANMELDUNG

(11) **EP 1 053 929 A2**
(43) Veröffentlichungstag der Anmeldung: **22.11.2000**
(21) Anmeldenummer: 00110487.6
(22) Anmeldetag: 17.05.2000
(51) Int. Cl.: B62D 25/10

(54) **Fahrzeug mit Abdeckung**

(30) Priorität: 21.05.1999 US 316841
(71) Anmelder: DEERE & COMPANY, Moline, Illinois 61265-8098 (US)
(72) Erfinder: Surridge, David Gayland, Garner, NC 27529 (US)
(74) Vertreter: Magin, Ludwig Bernhard

(57) **Zusammenfassung**

Bekannte Abdeckungen oder Hauben für kleine Fahrzeuge wie für Frontmäher umschließen üblicherweise einen Antrieb, ein Kühlsystem, Hydraulikeinrichtungen, Gestänge und weitere Fahrzeugbaugruppen. Üblicherweise sind diese Abdeckungen derart an dem Fahrzeug angebracht, daß sie um eine Querachse verschwenkt und an einem Ende angehoben werden können, um einen begrenzten Zugang zu den Fahrzeugbaugruppen, die in dem Motorraum angeordnet sind, zu gestatten.

Es wird ein Fahrzeug (10) mit einer Abdeckung (38) gezeigt, die mittels einer Schiebeeinrichtung an dem Fahrzeug (10) angebracht ist, wodurch ein einfacher Zugang zu unter der Abdeckung (38) angeordneten Fahrzeugbaugruppen ermöglicht wird.

Fahrzeug werden in der Rasen-, Garten- bzw. Grundstückspflege eingesetzt.

## Beschreibung

Die Erfindung betrifft ein Fahrzeug mit einer Abdeckung, die zumindest eine Baugruppe des Fahrzeugs zumindest bereichsweise umschließt.

Bekannte Abdeckungen oder Hauben für kleine Fahrzeuge wie für Frontmäher umschließen üblicherweise einen Antrieb, ein Kühlsystem, Hydraulikeinrichtungen, Gestänge und weitere Fahrzeugbaugruppen. Üblicherweise sind diese Abdeckungen derart an dem Fahrzeug angebracht, daß sie um eine Querachse verschwenkt und an einem Ende angehoben werden können, um einen begrenzten Zugang zu den Fahrzeugbaugruppen, die in dem Motorraum angeordnet sind, zu gestatten. Während diese Anordnungen Zugang zu einigen Fahrzeugbaugruppen zur Verfügung stellen können, kann der Zugang durch die angehobene Haube begrenzt sein. Ein weiterer Zugang zu Baugruppen, die an den Seiten und/oder in Endbereichen des Fahrzeugs angeordnet sind, erfordern oftmals ein Entfernen von Seiten- und/oder Endabdeckungen. Eine solche Abdeckung kann beispielsweise dem Prospekt von TORO mit dem Titel "Reelmaster 500-D with Automated Control Electronics", Form No. 92-60-T entnommen werden.

Das der Erfindung zugrunde liegende Problem wird darin gesehen, daß bekannte Abdeckungen unkomfortabel in der Handhabung sind.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann die unter der Abdeckung angeordnete Baugruppe beispielsweise zu Wartungszwecken vollständig zugänglich gemacht werden, ohne daß es zu Behinderungen einer Bedienungsperson durch eine aufgeklappte Abdeckung kommt und ohne daß zusätzliche Abdeckungen abgenommen werden müssen. Die Abdeckung deckt dabei nicht nur einen Bereich des Fahrzeugs ab, sondern sie umschließt die Baugruppe zumindest bereichsweise, so daß eine Verwendung weiterer Abdeckungen nicht notwendig ist. Bei der Baugruppe kann es sich beispielsweise um den Antrieb beispielsweise in der Art eines Verbrennungsmotors des Fahrzeugs aber auch um weitere Baugruppen, wie beispielsweise ein Kühlsystem, ein Hydrauliksystem, weitere Antriebe bzw. Motoren oder auch um Lenk- oder Steuergestänge etc. handeln.

Um die Baugruppe möglichst vollständig zu umschließen, kann die Abdeckung eine zentrale Fläche und wenigstens zwei Seitenflächen aufweisen. Darüber hinaus kann auch eine vordere bzw. eine rückwärtige Fläche vorgesehen sein, so daß die Abdeckung nur einenends offen ausgeführt ist um ein Verschieben der Abdeckung und damit ein Freigeben der Baugruppe zu ermöglichen.

Es ist denkbar, die Abdeckung auf einem Fahrzeugrahmen oder einer geeigneten Baugruppe aufzulegen, auf der ein Gleiten der Abdeckung möglich ist. Vorzugsweise sind aber an der Abdeckung und an dem Fahrzeug bzw. an einem Bauteil des Fahrzeugs Führungselemente vorgesehen, die derart zusammenwirken, daß ein geführtes Verschieben der Abdeckung möglich wird. Die Führungselemente sind vorzugsweise an beiden Seitenbereichen der Abdeckung vorgesehen, so daß einem Verkanten entgegengewirkt wird, es ist aber auch die Verwendung eines Führungselements an der Abdeckung bzw. dem Fahrzeug beispielsweise in dem zentralen Bereich denkbar.

Sind die Führungselemente zumindest im wesentlichen vertikal ausgerichtet, so ist ein gleichmäßiges Verschieben der Abdeckung möglich, ohne daß deren Gewicht nach oben gedrückt und dort gesichert werden oder nach unten geschoben werden muß.

Führungselemente können in einfacher Weise in der Art von Schienenführungen gebildet werden, indem eines der Führungselemente einen Kanal aufweist, der zur Aufnahme einer Rippe des anderen Führungselements ausgebildet ist. Neben solchen Gleitlagerungen ist auch die Verwendung von Rollenlagern denkbar.

Sind Anschläge vorgesehen, die den Verschiebebereich der Abdeckung begrenzen, so kann einem unbeabsichtigten Entfernen der Abdeckung von dem Fahrzeug bzw. den Führungselementen entgegengewirkt werden. Diese Anschläge sind vorzugsweise lösbar vorgesehen, so daß sie entfernt werden können, um die Abdeckung vollständig von dem Fahrzeug abnehmen zu können, beispielsweise um sie auszutauschen oder um einen noch besseren Zugang zu der Baugruppe zu ermöglichen. Es ist auch denkbar, daß die Anschläge beispielsweise durch eine Bedienungsperson an unterschiedlichen Positionen angebracht werden können, so daß der maximale Verschiebebereich der Abdeckung variiert werden kann. Die Anschläge können an den Führungselementen oder an dem Fahrzeug vorgesehen sein. In einfacher Weise können sie als in dem einen Führungselement lösbar vorgesehener Stift ausgeführt sein, der in einer oder auch in unterschiedlichen Aussparungen in dem einen Kanal aufweisenden Führungselement aufgenommen wird und der mit einem Vorsprung an dem anderen Führungselement zusammenwirken kann, so daß der Vorsprung bei Erreichen der maximalen Verschiebung an dem Stift bzw. Bolzen anliegt.

Die Abdeckung kann mittels einer Verriegelungseinrichtung in einer oder auch in mehreren vorgegebenen oder auch frei bestimmbaren Stellungen festlegbar sein. Vorzugsweise ist dies zumindest eine Position in der die Abdeckung geschlossen ist, das heißt in der sie die Baugruppe abdeckt. Eine solche Verriegelung kann mittels eines manuell betätigbaren Riegels, eines Stifts etc. vorgenommen werden. Besonders vorteilhaft ist es aber wenn die Verriegelung derart federbelastet ist, daß sie in der geschlossenen Stellung automatisch einschnappt und die Abdeckung dort hält, bis die Verriegelungseinrichtung durch eine Bedienungsperson gelöst wird.

In der Abdeckung können Aussparungen vorgesehen sein, die eine Luftzufuhr zu einer oder mehreren unter der Abdeckung vorgesehenen Baugruppen ermöglicht. Bei den Baugruppen kann es sich beispielsweise um einen Antrieb beispielsweise in der Art eines Verbrennungsmotors, eines Elektromotors etc. oder auch um eine Hydraulikeinrichtung, eine Klimaanlage, einen Wärmetauscher u.a. handeln. Dies ist besonders günstig, wenn die Abdeckung die Baugruppe(n) vollständig umschließt, um sie vor Umgebungseinflüssen zu schützen bzw. um einen ungeschützten Zugriff zu verhindern. Auf diese Weise kann den Baugruppen beispielsweise Kühlluft oder auch für Verbrennungsvorgänge benötigte Luft zugeführt werden.

Die Abdeckung ist besonders robust, leicht und einfach in der Herstellung, wenn sie aus einem Kunststoff bzw. aus einem Kunststoffverbundmaterial hergestellt wird. Die Abdeckung kann beispielsweise durch einen Rotationsformprozeß hergestellt werden. Es ist aber auch die Ausführung aus Metall beispielsweise einem Blech denkbar.

Die Abdeckung kann sich an mehreren Punkten an dem Fahrzeug bzw. Baugruppen desselben abstützen. Günstig ist es aber, wenn die Abdeckung freitragend ausgeführt ist, so daß sie sich vorzugsweise nur über die Führungselemente an dem Fahrzeug abstützt, wodurch ein unbehindertes Verschieben der Abdeckung ermöglicht wird.

Solche Abdeckungen können an unterschiedlichsten Fahrzeugen vorgesehen sein, vorzugsweise finden sie aber an Fahrzeugen zur Rasen-, Garten- bzw. Grundstückspflege Verwendung, da bei solchen Fahrzeugen auf eine einfache, robuste und kostengünstige Ausführung Wert gelegt wird und eine solche Abdeckung darüber hinaus den Bedienungskomfort erhöht, da die Abdeckung zur Wartung nur verschoben nicht aber an- und abgebaut bzw. in unhandlicher Weise verschwenkt werden muß.

In der Zeichnung ist ein nachfolgend näher beschriebenes Ausführungsbeispiel der Erfindung dargestellt. Es zeigt:
- Fig. 1: eine Ansicht eines Fahrzeugs von rückwärts, an welchem eine erfindungsgemäße Abdeckung verwendet werden kann,
- Fig. 2: eine vergrößerte rückwärtige Teilansicht des Fahrzeugs mit Baugruppen, die innerhalb der Abdeckung angeordnet sind,
- Fig. 3: eine rückwärtige perspektivische Ansicht der Abdeckung in einer nach rückwärts verschobenen Stellung,
- Fig. 4: eine vergrößerte Teilansicht einer Seite der Abdeckung mit einem ersten Führungselement,
- Fig. 5: eine vergrößerte, perspektivische Ansicht der Abdeckung von vorne,
- Fig. 6: einen Schnitt entlang der Linie 6-6 aus Figur 3, die erste und zweite Führungselemente zeigt,
- Fig. 7: eine vergrößerte Seitenansicht eines Kraftstofftanks des Fahrzeugs, an dem das zweite Führungselement angebracht ist,
- Fig. 8: eine Ansicht entsprechend Figur 4, wobei das zweite Führungselement in einer Explosionsdarstellung gezeigt wird,
- Fig. 9: eine vergrößerte Ansicht eines Endbereichs des zweiten Führungselements,
- Fig. 10: eine vergrößerte Ansicht einer Verriegelungseinrichtung für die Abdeckung und
- Fig. 11: eine Seitenansicht der Verriegelungseinrichtung aus Figur 10.

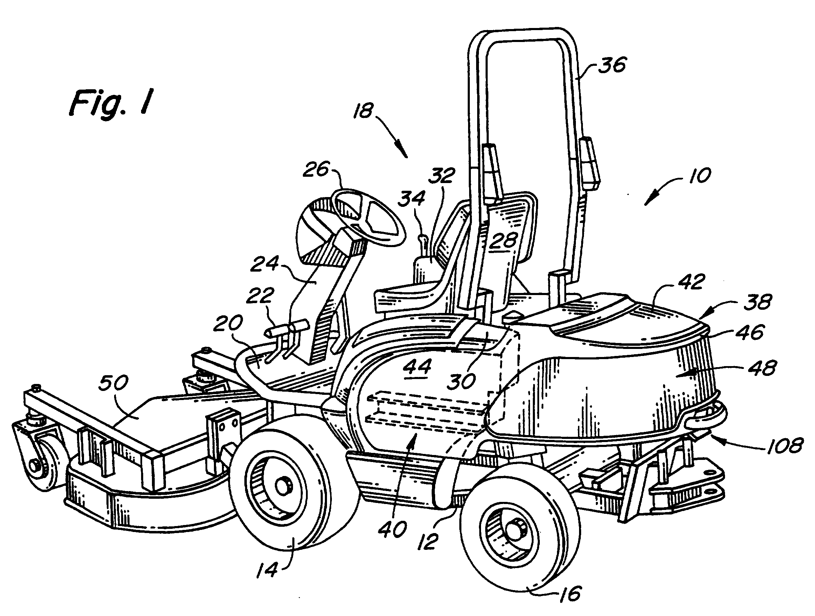

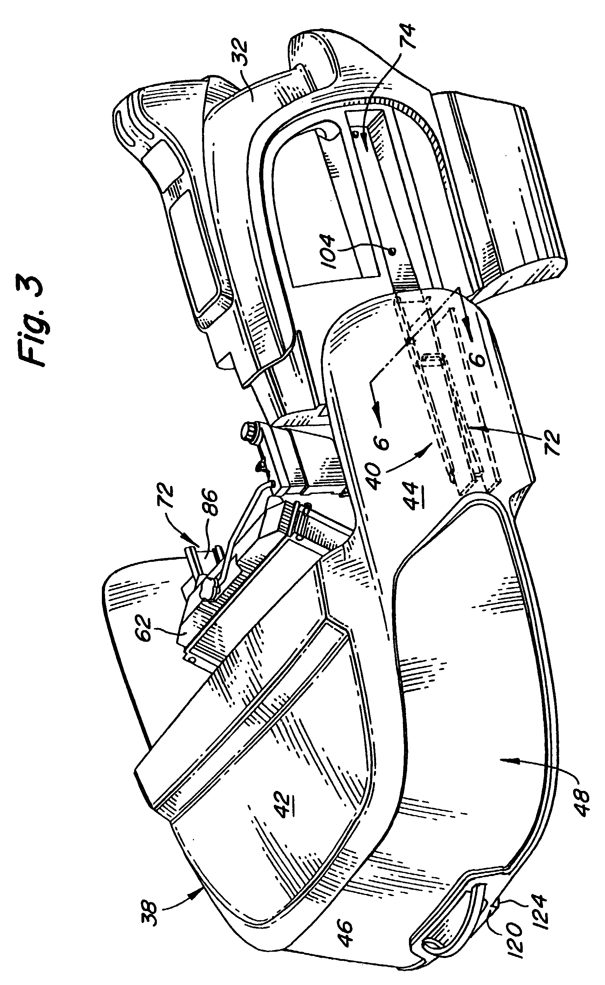

Es soll zuerst Figur 1 betrachtet werden, in der eine rückwärtige perspektivische Ansicht eines Frontmähers bzw. eines Fahrzeugs 10 von oben gezeigt wird, an welchem die vorliegende Erfindung verwendet werden kann. Das Fahrzeug 10 weist einen Rahmen 12 auf, der durch vordere, antreibbare Räder 14 und rückwärtige, lenkbare Räder 16 getragen wird. Der Rahmen 12 trägt an seinem vorderen Ende eine Bedienerplattform 18 mit einer Fußplattform 20 mit Pedalen 22, die sich durch diese nach oben erstrecken, eine nach oben stehende Lenksäule 24, welche ein Lenkrad 26 trägt, und einem Bedienersitz 28. Auf der linken Seite des Bedienersitzes 28 ist ein Kraftstofftank 20 angeordnet, während sich auf der rechten Seite der Bedienerplattform 18 eine Konsole 32 mit Bedienungselemente 34 befindet. Rückwärts des Bedienersitzes 28 ist ein faltbarer Überrollschutz 36 angeordnet. Eine Haube bzw. Abdeckung 38 umschließt die rückwärtigen und seitlichen Bereiche des Fahrzeugs 10, welche an den Kraftstofftank 30 und die Bedienungselemente 34 und die Konsole 32 benachbart zum Verschieben in Längsrichtung angebracht ist. Ein Verschieben der Abdeckung 38 zwischen einer vorderen geschlossenen und einer rückwärtigen Stellung, wie sie entsprechend in den Figuren 1 und 3 gezeigt werden, wird durch ein Vorsehen einer Führungseinrichtung 40 erzielt. Die Abdeckung 38 weist eine Oberseite 42, Seitentlächen 44 und einen rückwärtigen Bereich 46 auf. In dem rückwärtigen Bereich 46 der Abdeckung 38 ist ein abgeschirmter Aussparungen 48 vorgesehen, welche es Kühl- und Vergaserluft erlaubt, hindurchzugelangen. An einem vorderen Bereich des Fahrzeugs 10 ist ein Mähwerk 50 angebracht.

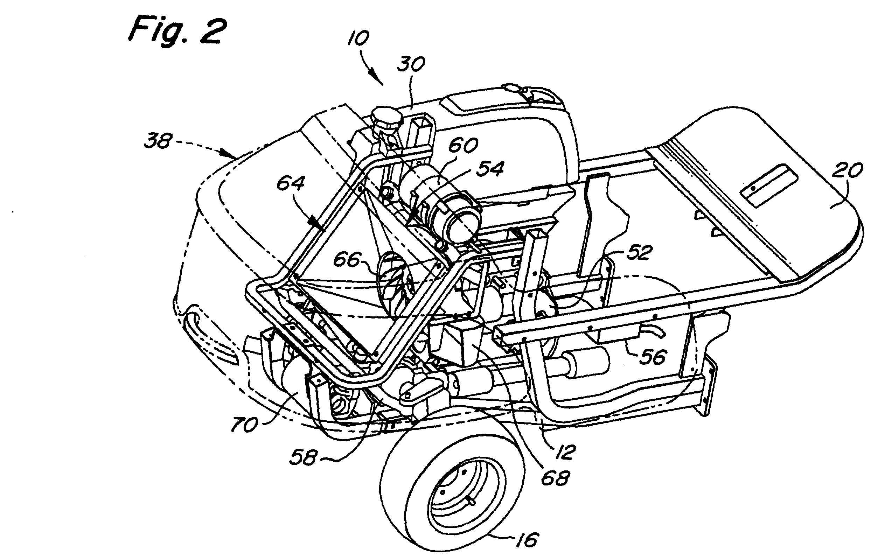

Es wird nun Figur 2 betrachtet, in der eine rückwärtige, perspektivische Teilansicht des Fahrzeugs 10 von oben und von Baugruppen, die hinter der Abdeckung 38, welche in unterbrochenen Linien dargestellt ist, angeordnet sind, gezeigt wird. Diese Ansicht zeigt den Raum, der durch die Abdeckung 38 umschlossen wird und in welchem ein Antrieb 52, ein Kühlsystem 54, eine Hydraulik 56, Lenksteuergestänge 58 und zugehörige Fahrzeugbaugruppen, wie eine Hydraulik, Bedienhebel und Pedale angeordnet sind. Der Antrieb 52 ist in dem mittleren Bereich des Fahrzeugs 10 gerade vor den rückwärtigen Rädern 16 angebracht. Ein Luftfilter 60 ist oberhalb des Antriebs 52 angeordnet, um diesem Vergaserluft zur Verfügung zu stellen. Ein Wärmetauscher bzw. ein Kühler 62, welcher in Figur 3 dargestellt ist, ist an den Rändern des Lufteinlaßkanals 64 angebracht. Zwischen dem Antrieb 52 und dem Kühler 62 ist ein Lüfterrad 66 vorgesehen, um Luft aus einer im wesentlichen horizontalen Frontrichtung zum Kühlen des Antriebs 52 und aus einer rückwärtigen Richtung zum Kühlen des Kühlers 62 anzuziehen. Durch das Lüfterrad 66 angezogene Luft wird radial durch linke und rechte Luftkanäle ausgestoßen, wobei der rechte Luftkanal 68 in Figur 2 dargestellt ist. Die Luftkanäle 68 lenken erwärmte Luft zur Seite der Abdeckung 38 und in einem Winkel nach unten, so daß sie von der ausgeschnittenen Aussparung 48 in den mittleren und seitlichen Bereichen der Abdeckung 38 weggelenkt wird. Die Luftkanäle 68 weisen eine nach unten gerichtete Erweiterung auf, welche nicht in Figur 2 dargestellt ist, die Luft über einen Auspufftopf 70 leiten, der an dem Heck des Fahrzeugs 10 angeordnet ist, um diesen zu kühlen und um der Ansammlung von Gras und verschiedenartigem Schmutz angrenzend an den Auspufftopf 70 entgegenzuwirken.

Es wird nun auch Figur 3 betrachtet, in der eine Ansicht gezeigt wird, in der die Abdeckung 38 sich in einer nach rückwärts verschobenen Stellung befindet. Die Führungseinrichtung 40, welche es der Abdeckung 38 erlaubt, sich in Längsrichtung entlang einem vorzugsweise geraden Pfad zu verschieben, weist ein Paar erster und zweiter Führungselemente 72 und 74 zwischen jeder Seitenfläche 44 der Abdeckung 38 und dem Fahrzeug 10 auf. Die ersten Führungselemente 72 sind an der Innenseite jeder der Seitenflächen 44 der Abdeckung 38 angebracht und die zweiten Führungselemente 74 sind an die Seitenflächen des Kraftstofftanks 30 beziehungsweise der Konsole 32 angrenzend vorgesehen. Die Konsole 32 ist auf der rechten Seite der Bedienerplattform 18 vorgesehen, während der Kraftstofftank 30 auf der linken Seite der Bedienerplattform 18 angebracht ist.

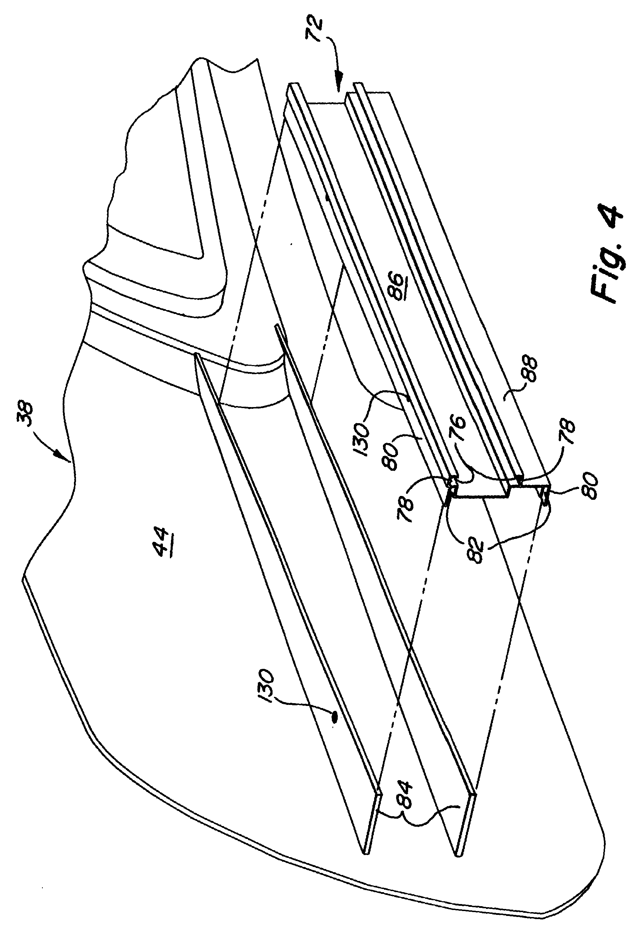

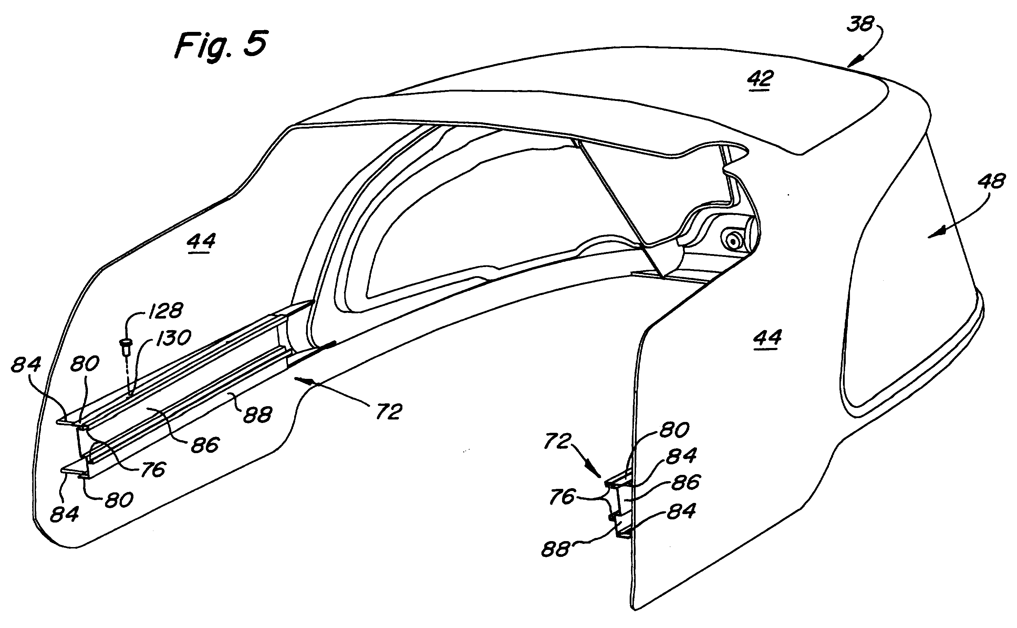

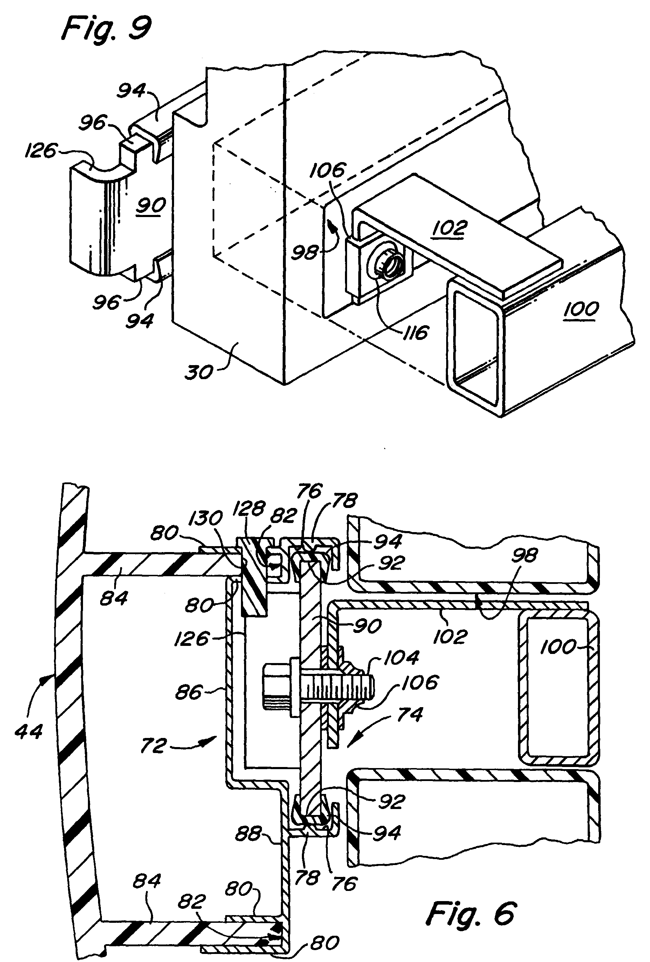

Die ersten und zweiten Führungselemente 72 und 74 sind genauer in den Figuren 4 - 9 dargestellt. Wie es in den Figuren 4 und 5 gezeigt wird, weist jedes erste Führungselement 72 ein längliches Element mit oberen und unteren, beabstandeten und gegenüberliegenden Kanälen 76 auf. In der Mitte jedes der Kanäle 76 befindet sich eine erhöhte Oberfläche 78. Der Querschnitt des ersten Führungselements 72, wie es am besten in Figur 6 gezeigt wird, weist vertikal beabstandete obere und untere Schenkel 80 mit länglichen Aussparungen 82 auf. Die Aussparungen 82 sind so dimensioniert, um eines der vertikal beabstandeten Leitelemente 84 aufzunehmen, die an der Innenseite der Seitenfläche 44 der Abdeckung 38 angeformt sind. In der bevorzugten Ausführungsform ist die Abdeckung 38 aus einem Kunststoffverbundmaterial hergestellt, welches erlaubt, daß die Leitelernente 84 gleichzeitig geformt werden. Klebstoff wird verwendet, um jedes Leitelement 84 in einem Schlitz 82 des ersten Führungselements 72 zu sichern. Das erste Führungselement 72 weist weiter ein vertikales Verbindungselement 86 mit einem Vorsprung 88 auf. Wenn das erste Führungselement 72 mit einem der Leitbleche 84 verbunden worden ist, bilden die Verbindungselemente 86, die Leitelemente 84 und die Seitenflächen 44 der Abdeckung 38 eine zellenartige Verstärkungsstruktur, die dazu dient das freitragende Gewicht der Abdeckung 38 auf den ersten Führungselementen 72 abzustützen.

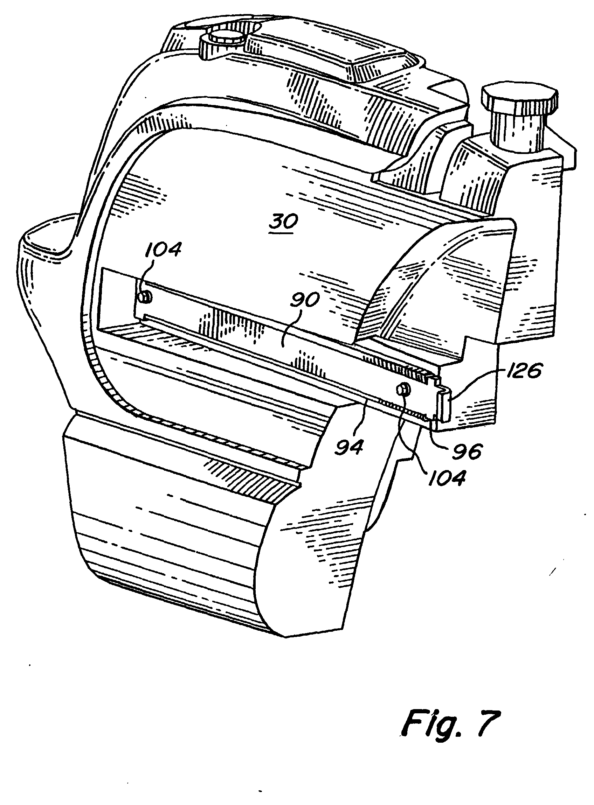

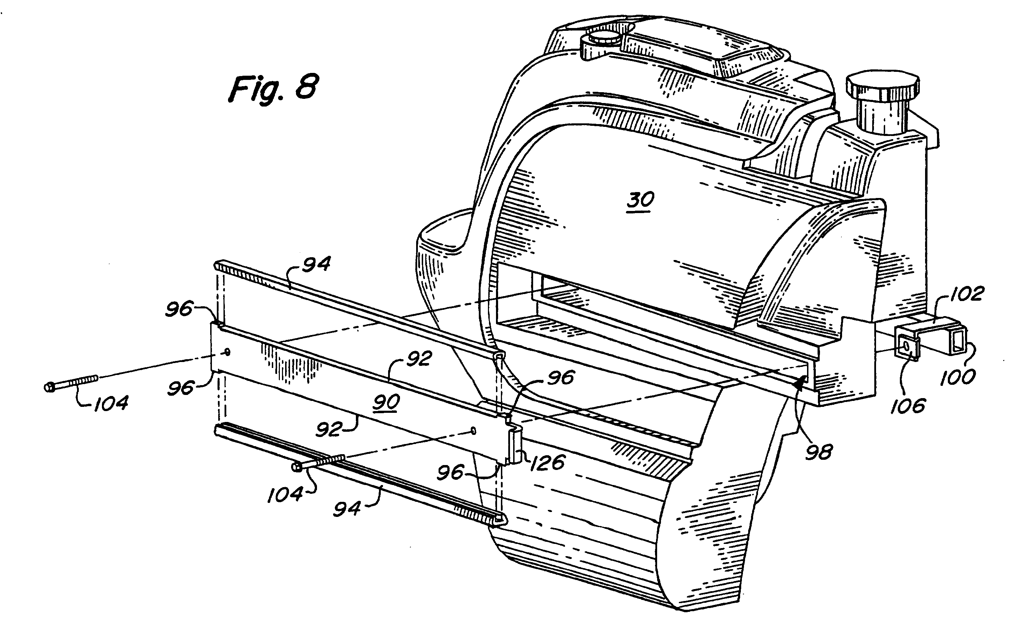

Die zweiten Führungselemente 74, welche jeweils den äußeren Oberflächen des Kraftstofftanks 30 und der Konsole 32 benachbart angeordnet sind, sind auch im wesentlichen identisch ausgebildet und entsprechend soll daher nur das zweite Führungselement 74, das dem Kraftstofftank 30 angrenzend angeordnet ist und in den Figuren 7 und 8 dargestellt ist, genauer beschrieben werden. Das zweite Führungselement 74 weist eine vertikal ausgerichtete Strebe 90 mit oberen und unteren Kanten 92 auf, auf welchen sich in Längsrichtung erstreckende Rippen 94 angebracht sind. Die Rippen 94 bestehen aus einem Kunststoffverbundmaterial und sind so ausgebildet, daß sie dicht an den Kanten 92 der Strebe 90 zwischen den Anschlägen 96 anliegen. Klebstoff oder ein ähnliches Befestigungsmittel kann verwendet werden, um die Rippen 94 an den Kanten 92 zu befestigen, wenn dies gewünscht ist.

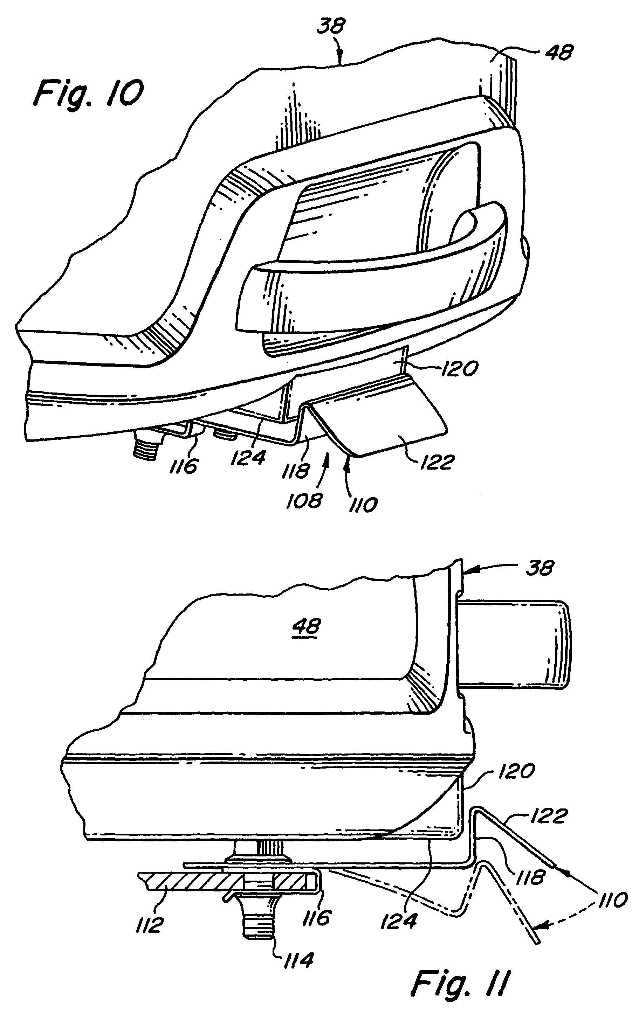

In der bevorzugten Ausführungsform sind der Kraftstofftank 30 und die Konsole mittels eines Rotationsformvorgangs hergestellt und weisen eine eingeformte sich in Längsrichtung erstreckende Öffnung 98 auf (siehe Figuren 8 und 9). Wie es in den Figuren 6 bis 9 gezeigt wird, sind die zweiten Führungselemente 74 an einem Rahmenelement 100 angebracht, welches hinter dem Kraftstofftank 30 oder der Konsole 32 angeordnet ist. Ein L-förmiger Halter 102 ist an dem Rahmenelement 100 angebracht und erstreckt sich durch die Öffnung 98, die in den Kraftstofftank 30 oder die Konsole 32 eingeformt ist, um mit jedem Ende der Strebe 90 verbunden zu sein. Schrauben 104 und eine Klemme 106 oder ähnliche Befestigungsmittel können verwendet werden, um die Enden der Strebe 90 des zweiten Führungselements 74 mit den Haltern 102 und dem Rahmenelement 100 zu verbinden. Auf diese Weise sind der Kraftstofftank 30 und die Konsole 32 zwischen dem zweiten Führungselement 74 und dem Rahmenelement 100 angeordnet, wenn die zweiten Führungselemente 74 an dem Fahrzeug 10 angebracht sind.

Wie es in Figur 6 gezeigt wird, gleiten oder reiten die Kanäle 76 der ersten Führungselemente 72 entlang der Rippen 94 der zweiten Führungselemente 74, um es der Abdeckung 38 zu erlauben, sich gleitend vorwärts und rückwärts zu verschieben. Die erhöhte Oberfläche 78, die in jedem Kanal 76 vorgesehen ist, minimiert den Kontakt zwischen den Rippen 94 und den Kanälen 76, wodurch der Reibungswiderstand verringert wird und den beiden Führungselementen 72 und 74 erlaubt wird, sanfter und leichter aneinander entlangzubewegen. Das Vorsehen der beiden vertikal beabstandeten Kanäle 76 und Rippen 94 dient dazu, die rückwärts freitragende Abdeckung 38 zu stützen, wenn sie bewegt wird, wodurch ein Verdrehen und/oder Verkanten zwischen den ersten und zweiten Führungselementen 72 und 74 minimiert wird.

Wenn das Fahrzeug 10 betrieben wird, würde die Abdeckung 38 die Stellung einnehmen, die in Figur 1 gezeigt wird, und eine Verriegelungseinrichtung 108 (siehe Figur 10), die zwischen der Abdeckung 38 und dem Fahrzeug 10 vorgesehen ist, würde sie in ihrer geschlossenen Stellung sichern. Während jede Verriegelungsstruktur, die für die Verwendung zwischen der verschieblichen Abdeckung 38 und dem Rahmen 12 paßt, verwendet werden kann, wird ein einfacher federbelasteter Mechanismus bzw. eine Verriegelungseinrichtung 108 bevorzugt. Die Verriegelungseinrichtung 108 weist ein flaches Federelement 110 auf, das an dem Rahmenelement 112 des Fahrzeugs angebracht ist. Eine einfache Schraube 114 und eine Klemme 116 oder ähnliche Befestigungsmittel können verwendet werden, um das Federelement 110 an dem Rahmenelement 112 des Fahrzeugs 10 zu befestigen. Das Federelement 110 weist einen nach oben stehenden Ansatzbereich 118 auf, der daran angepaßt ist, an einer im wesentlichen L-förmigen Schulter anzuliegen, die an der Abdeckung 38 angebracht ist, um die Abdeckung 38 in ihrer vorderen oder geschlossenen Stellung zu halten. Um die Verriegelungseinrichtung 108 zu lösen und es der Abdeckung 38 zu erlauben, gleitend nach rückwärts verschoben zu werden, wird das Federelement 110 in die in unterbrochenen Linien in Figur 11 gezeigte Stellung heruntergedrückt. Wenn die Abdeckung 38 geschlossen werden soll, würde die obere Kante 122 des Federelements 110 mit der unteren Oberfläche 124 der Schulter 120 in Kontakt treten, um das Federelement 110 herunterzudrücken und die Federwirkung des Federelements 110 würde es nach oben und an den in Figur 11 dargestellten Platz zwingen, nachdem die Abdeckung 38 nach vorn geschoben wurde.

Anschläge sind zwischen den ersten und den zweiten Führungselementen 72 und 74 vorgesehen, um die Bewegung der Abdeckung 38 nach rückwärts zu begrenzen (siehe im besonderen die Figuren 6 - 9). In der bevorzugten Ausführungsform, weisen die Anschläge einen nach außen abstehenden Arm 126, der mit dem rückwärtigen Ende jeder Strebe 90 verbunden ist, und einen Stift 128 auf, welcher verschieblich in einer Aussparung 130 aufgenommen wird, welche durch das erste Führungselement 72 und das Leitelement 84, mit dem es verbunden ist, zur Verfügung gestellt wird. Wenn die Abdeckung 38 in die rückwärtige Stellung, die in Figur 3 gezeigt wird, verschoben ist, würde der Stift 128 an dem nach außen abstehenden Arm 126 angreifen und eine weitere Bewegung nach rückwärts unterbinden. Wenn die Abdeckung 38 von dem Fahrzeug 10 abgenommen werden soll, um einen größeren Zugangsfreiraum zu den Baugruppen, die in dem Einbauraum angeordnet sind, zu ermöglichen, würde die Abdeckung 38 leicht aus ihrer geschlossenen Stellung nach vorne bewegt und der Stift 128 in jedem ersten Führungselement 72 würde aus der Aussparung 130 in dem ersten Führungselement 72 und dem Leitelement 84 entfernt werden, wodurch dem ersten Führungselement 72 der Abdeckung gestattet würde, aus den Enden der zweiten Führungselemente 72 herauszugleiten. Sollte es eine Bedienungsperson wünschen, den Bereich der Schiebebewegung der Abdeckung 38 zu verändern, könnten zusätzliche Stifte aufnehmende Aussparungen 130 an den gewünschten Stellen in dem ersten Führungselement 72 und den Leitelementen 84 vorgesehen werden.

Mit der vorliegenden Erfindung wird eine Haube oder eine Abdeckung 38 zur Verfügung gestellt, welche einen wesentlichen Teil des Antriebs 52, des Kühlungssystems, der hydraulischer und mechanischer Bautruppen des Fahrzeugs 10 mit einem einzigen Element umschließt. Sie weist abhängige Seitenflächen 44 wie auch rückwärtige Bereiche 46 auf, um Baugruppen einzuschließen, die im Inneren des Fahrzeugs 10 angeordnet sind, wodurch die Notwendigkeit separater, entfernbarer Abdeckplatten ausgeschlossen wird. Darüber hinaus sind in der Abdeckung 38 abgeschirmte Aussparungen 48 vorgesehen, die es der Luft gestatten durch das Kühlungssystem und den Antrieb 52 zu gelangen. Da zur Herstellung der Abdeckung 38 ein Kunststoffverbundmaterial verwendet wird, können die Leitelemente 84 wie auch die Lufteinlaßöffnungen bzw. Aussparungen 48 leicht eingeformt werden, während gleichzeitig die Möglichkeit gegeben wird, die große Abdeckung 38 zu gestalten.

## Patentansprüche

1. Fahrzeug (10) mit einer Abdeckung (38), die zumindest eine Baugruppe des Fahrzeugs (10) zumindest bereichsweise umschließt, dadurch gekennzeichnet, daß die Abdeckung (38) mit dem Fahrzeug (10) derart verbindbar ist, daß sie in zumindest eine Stellung verschiebbar ist, in der sie die Baugruppe zumindest im wesentlichen freigibt.

2. Fahrzeug nach Anspruch 1, dadurch gekennzeichnet, daß die Abdeckung (38) eine zentrale Fläche und zumindest zwei Seitenflächen aufweist, die einen Raum einschließen.

3. Fahrzeug nach einem oder mehreren der vorherigen Ansprüche, gekennzeichnet durch zumindest ein erstes Führungselement (72) und zumindest ein zweites Führungselement (74), wobei das erste Führungselement (72) vorzugsweise an der Abdeckung (38) und das zweite Führungselement (74) an dem Fahrzeug (10) vorgesehen ist.

4. Fahrzeug nach Anspruch 3, dadurch gekennzeichnet, daß die Führungselemente (72, 74) zumindest im wesentlichen vertikal ausgerichtet sind.

5. Fahrzeug nach Anspruch 3 oder 4, dadurch gekennzeichnet, daß zumindest eines der Führungselemente (72, 74) einen Kanal (76) aufweist, der mit einer Rippe (94) des zweiten Führungselements (72, 74) zusammenwirken kann.

6. Fahrzeug nach einem oder mehreren der vorherigen Ansprüche, gekennzeichnet durch vorzugsweise lösbare Anschläge, durch die der Verschiebebereich der Abdeckung (38) begrenzt werden kann.

7. Fahrzeug nach einem oder mehreren der vorherigen Ansprüche, gekennzeichnet durch eine vorzugsweise federbelastete Verriegelungseinrichtung (108) mittels derer die Abdeckung (38) an dem Fahrzeug (10) festgelegt werden kann.

8. Fahrzeug nach einem oder mehreren der vorherigen Ansprüche, dadurch gekennzeichnet, daß die Abdeckung (38) Aussparungen (48) vorzugsweise zur Luftzufuhr zu einer oder mehreren Baugruppen aufweist.

9. Fahrzeug nach einem oder mehreren der vorherigen Ansprüche, dadurch gekennzeichnet, daß die Abdeckung (38) zumindest im wesentlichen aus einem Kunststoff bzw. einem Kunststoffverbundmaterial besteht.

10. Fahrzeug nach einem oder mehreren der vorherigen Ansprüche, dadurch gekennzeichnet, daß die Abdeckung (38) freitragend ausgeführt ist.

11. Fahrzeug nach einem oder mehreren der vorherigen Ansprüche ausgebildet zur Verwendung in der Rasen-, Garten- bzw. Grundstückspflege.
